# EUROPEAN PATENT APPLICATION

(11) **EP 4 621 595 A1**
(43) Date of publication of application: **24.09.2025**
(21) Application number: 25164227.8
(22) Date of filing: 17.03.2025
(51) Int. Cl.: G06F 16/34

(54) **METHOD AND APPARATUS, COMPUTER DEVICE, AND STORAGE MEDIUM FOR SUMMARIZING DIALOG CONTENT**

(30) Priority: 22.03.2024 CN 202410339577
(71) Applicant: Beijing Youzhuju Network Technology Co., Ltd., Beijing 101299 (CN)
(72) Inventor: LIANG, Chen, Beijing, 100028 (CN)
(74) Representative: Isarpatent

(57) **Abstract**

The present disclosure relates to the field of computer technology, and discloses a method, an apparatus, a computer device and a storage medium for summarizing a dialog content. The method for summarizing the dialog content includes: generating summary configuration information in response to a summary configuration operation for a dialog to be processed, where the summary configuration information is used to indicate a dialog background and a summary item included in the generated summary; generating a prompt header of a large language model based on the summary configuration information; and instructing the large language model to summarize the dialog to be processed according to the prompt header to obtain a summary result. In this way, the dialog content summarization is implemented by the large language model, thereby reducing reliance on manpower, and reducing labor costs while improving summarization efficiency.

## Description

### FIELD

The present disclosure relates to the field of computer technology, and in particular, to a method, an apparatus, a computer device, and a storage medium for summarizing a dialog content.

### BACKGROUND

Summarizing the dialog content refers to extraction and summary of one or more dialog contents. It aims to extract key information from the dialog and simplify it into a form that is easy to understand and remember. It is widely used in many fields, such as customer service, meeting minutes, interviews, and any scenarios where important information needs to be obtained and shared from the communication. However, in related dialog content summarization solutions, designated recorders are often relied on to summarize dialog content, which leads to poor summarization efficiency and high labor costs.

### SUMMARY

In view of this, the present disclosure provides a method, and apparatus, a computer device, and a storage medium for summarizing a dialog content to solve the problem of poor summarization efficiency and high labor costs in dialog content summarization solutions.

In a first aspect, the present disclosure provides a method for summarizing a dialog content, including:
generating, in response to a summary configuration operation for a dialog to be processed, summary configuration information, where the summary configuration information is used to indicate a dialog background and a summary item included in the generated summary;
generating, based on the summary configuration information, a prompt header of a large language model; and
instructing, according to the prompt header, the large language model to summarize the dialog to be processed to obtain a summary result.

In a second aspect, the present disclosure provides an apparatus for summarizing a dialog content, including:
a configuration module, configured to generate summary configuration information in response to a summary configuration operation for a dialog to be processed, where the summary configuration information is used to indicate a dialog background and a summary item included in the generated summary;
a generation module, configured to generate a prompt header of a large language model based on the summary configuration information; and
a summarization module, configured to instruct the large language model according to the prompt header to summarize the dialog to be processed to obtain a summary result.

In a third aspect, the present disclosure provides a computer device, including: a memory and a processor, where the memory and the processor are communicatively connected with each other, the memory having computer instructions stored thereon, and the processor performs the method for summarizing the dialog content of the first aspect or any of corresponding implementations thereof by executing the computer instructions.

In a fourth aspect, the present disclosure provides a computer-readable storage medium, having computer instructions stored thereon, and the computer instructions are used to enable a computer to perform the method for summarizing the dialog content of the first aspect or any of corresponding implementations thereof.

### BRIEF DESCRIPTION OF THE DRAWINGS

In order to more clearly illustrate the technical solutions in the embodiments of the present disclosure or in the prior art, the following briefly introduces the drawings that need to be used in the Detailed Description of the Embodiments or the description the prior art. It is obvious that the drawings in the following description show some implementations of the present disclosure, and persons of ordinary skill in the art may still derive other drawings from these drawings without creative efforts.
FIG. 1 is a flowchart of a method for summarizing a dialog content according to an embodiment of the present disclosure;
FIG. 2 is a flowchart of a second method for summarizing a dialog content according to an embodiment of the present disclosure;
FIG. 3 is a flowchart of a third method for summarizing a dialog content according to an embodiment of the present disclosure;
FIG. 4 is a flowchart of a fourth method for summarizing a dialog content according to an embodiment of the present disclosure;
FIG. 5 is a flowchart of a fifth method for summarizing a dialog content according to an embodiment of the present disclosure;
FIG. 6 is a flowchart of a sixth method for summarizing a dialog content according to an embodiment of the present disclosure;
FIG. 7 is an architecture diagram of a system for summarizing a dialog according to an embodiment of the present disclosure;
FIG. 8 is a schematic diagram of a process of generating a Prompt header by a summary task creation sub-unit;
FIG. 9 is a structural block diagram of an apparatus for summarizing a dialog content according to an embodiment of the present disclosure; and
FIG. 10 is a schematic diagram of a hardware structure of a computer device according to an embodiment of the present disclosure.

### DETAILED DESCRIPTION OF EMBODIMENTS

In order to make the objectives, technical solutions, and advantages of the embodiments of the present disclosure clearer, the technical solutions in the embodiments of the present disclosure will be described hereunder clearly and comprehensively with reference to the drawings in the embodiments of the present disclosure. It is obvious that the described embodiments are merely some embodiments of the present disclosure, rather than all the embodiments. All other embodiments obtained by persons of ordinary skill in the art based on the embodiments of the present disclosure without creative efforts shall fall within the protection scope of the present disclosure.

The following describes the application scenarios in conjunction with the application scenarios on which the performing of the method for summarizing the dialog content depends with reference to the application scenario.

Summarizing the dialog content refers to extraction and summary of one or more dialog contents. It aims to extract key information from the dialog and simplify it into a form that is easy to understand and remember. It is widely used in many fields, such as customer service, meeting minutes, interviews, and any scenarios where important information needs to be obtained and shared from communication. However, in related dialog content summarization solutions, designated recorders are often relied on to summarize dialog content, which leads to poor summarization efficiency and high labor costs.

In addition, in related dialog content summarization solutions, artificial intelligence technology can also be used to assist recorders in summarizing dialog content, so as to reduce labor costs. For example, dialog content summarization may be performed by a conventional algorithm model such as a speech recognition model and a natural language processing model. However, conventional algorithm models still have problems such as insufficient summarization capability, and have less improvement in terms of improving summarization efficiency and reducing labor costs.

Based on this, the embodiments of the present disclosure provide a method for summarizing a dialog content. First, the method may generate summary configuration information in response to a summary configuration operation for a dialog to be processed, where the summary configuration information is used to indicate a dialog background and a summary item included in the generated summary. Then, the method may generate a prompt header of a large language model based on the summary configuration information, so as to instruct the large language model, according to the prompt header, to summarize the dialog to be processed to obtain a summary result. In this way, the dialog content summarization can be implemented by the large language model, thereby reducing reliance on manpower, and reducing labor costs while improving summarization efficiency.

According to the embodiments of the present disclosure, an embodiment of a method for summarizing a dialog content is provided. It should be noted that the steps shown in the flowcharts of the drawings may be executed in a computer system such as a set of computer-executable instructions. Although a logical order is shown in the flowcharts, the steps shown or described may be performed in an order different from that hereunder in some cases.

It can be understood that before using the technical solutions disclosed in the embodiments of the present disclosure, the user shall be informed of the type, usage scope, usage scenario, etc. of the personal information involved in the present disclosure and the user's authorization shall be obtained in an appropriate manner in accordance with relevant laws and regulations.

For example, when receiving an active request from a user, prompt information may be sent to the user, so as to clearly prompt the user that the operation requested by the user to be performed will require the acquisition and use of the user's personal information. In this way, the user may independently choose, according to the prompt information, whether to provide the personal information to software or hardware such as an electronic device, an application, a server, or a storage medium that executes the operation of the technical solution of the present disclosure.

As an optional but non-limiting implementation, the manner of sending prompt information to the user when receiving the active request from the user may be, for example, a pop-up window, and the prompt information may be presented in the pop-up window in text. In addition, the pop-up window may further include a selection control for the user to choose whether to "agree" or "disagree" to provide the personal information to the electronic device.

It can be understood that the above process of notifying and acquiring the user's authorization is only exemplary, and does not limit the implementations of the present disclosure. Other manners that meet relevant laws and regulations may also be applied to the implementations of the present disclosure.

It can be understood that the data involved in the technical solution (including but not limited to the data itself, the acquisition or use of the data) should comply with the requirements of corresponding laws, regulations and related provisions.

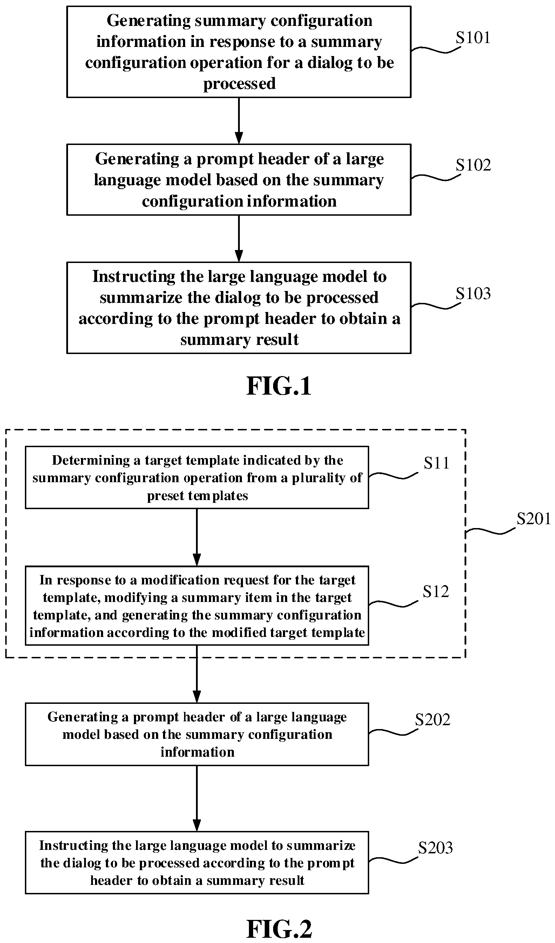

The present embodiment provides a method for summarizing the dialog content, which may be used in the above computer device. FIG. 1 is a flowchart of a method for summarizing the dialog content according to an embodiment of the present disclosure. As shown in FIG. 1, the process includes the following steps:

Step S101: generating summary configuration information in response to a summary configuration operation for a dialog to be processed, where the summary configuration information is used to indicate a dialog background and a summary item included in the generated summary.

In the embodiment of the present disclosure, the dialog to be processed may be a conference dialog, and the number of speakers in the conference is not limited herein. Considering the diversity of conference types and dialog backgrounds, the manner of generating the summary may also be different, where the conference type may be a lecture, a discussion, etc., and the dialog background may be used to indicate the knowledge field of the conference, such as medicine, electronics, etc.

Therefore, a summary template matching the dialog background and the conference type of the conference dialog may be configured through the summary configuration operation, where the summary template includes a plurality of summary items, such as a dialog theme, a number of speakers, a dialog summarization, a dialog conclusion, etc. Then, the dialog to be processed may be summarized according to the dialog background and the summary items.

For example, when the conference type is a discussion, the summary items in the summary configuration information may include a dialog conclusion, which is used to indicate a discussion result. Next, when summarizing the dialog to be processed, if the dialog background is the medical field, attention may be focused on discussion content related to the medical field in the dialog to be processed, so that the discussion result obtained may be a result related to the medical field.

Step S102: generating a prompt header of a large language model based on the summary configuration information.

In the embodiment of the present disclosure, the large language model may be an LLM (Large Language Model), and the prompt header is also referred to as the Prompt header. The prompt header may be used to indicate how the large language model summarizes the dialog to be processed according to the content configured in the summary configuration information, so as to obtain the summary result. Specifically, the prompt header may indicate how the large language model summarizes the dialog to be processed according to the dialog background, so as to obtain respective summary items.

For example, if the dialog background indicated by the summary configuration information is the field of cuisine, and the summary items include the dialog theme, the number of speakers, the dialog summarization, and the dialog conclusion, the following Prompt header can be generated:
Go

You are an expert in dialog content summarization, and now you need to summarize chat content in the field of cuisine.

Your summary generation template is shown below.

Dialog theme:
Number of speakers:
Dialog summarization:
Dialog conclusion:

Step S103: instructing the large language model to summarize the dialog to be processed according to the prompt header to obtain a summary result.

In the embodiment of the present disclosure, the above large language model may acquire the dialog content of the dialog to be processed in real time, and update the above Prompt header based on the acquired content. Specifically, considering that multiple people may participate in the conference, speakers corresponding to the acquired dialog content may be identified, so as to obtain the following Prompt header:
Go

The following is the content of the dialog:
User 1:
User 2:
User 3:
User 2:

It should be understood that when summarizing the above dialog to be processed, the dialog content of each speaker may be first summarized to obtain a sub-summarization, and then aggregation may be performed based on the sub-summarization, and the aggregation result may be summarized to obtain the above summary result. Here, taking the Prompt header in the above step S102 as an example, the following summary result may be obtained by the large language model:
Go
Dialog theme: whether to put eggs or tomatoes first when making scrambled eggs with tomatoes
Number of speakers: 3
Dialog summarization: parties discussed the cooking method of scrambled eggs with tomatoes, and argued about the order of cooking
Dialog conclusion: scramble eggs first, and then put tomatoes for scrambled eggs with tomatoes

Upon obtaining the above summary result, the summary result may be placed in a corresponding display region of the display interface, so that managers of the dialog to be processed can perform subsequent management operations. For example, the subsequent operation may mark and correct the summary result, and share the summary result with other users (such as the above speakers).

It can be seen from the above description that in the embodiment of the present disclosure, first, summary configuration information may be generated in response to a summary configuration operation for a dialog to be processed, where the summary configuration information is used to indicate a dialog background and a summary item included in a generated summary. Then, a prompt header of a large language model may be generated based on the summary configuration information, so as to instruct the large language model to summarize the dialog to be processed according to the prompt header to obtain a summary result. In this way, the dialog content summarization is implemented by the large language model, thereby reducing reliance on manpower, and reducing labor costs while improving summarization efficiency.

The present embodiment provides a second method for summarizing a dialog content, which may be used in the above mobile terminal, such as a mobile phone, a tablet computer, etc. FIG. 2 is a flowchart of a second method for summarizing a dialog content according to an embodiment of the present disclosure. As shown in FIG. 2, the process includes the following steps:
Step S201: generating summary configuration information in response to a summary configuration operation for a dialog to be processed.

Specifically, the above step S201 includes:
Step S11: determining a target template indicated by the summary configuration operation from a plurality of preset templates.
Step S12: in response to a modification request for the target template, modifying a summary item in the target template, and generating the summary configuration information according to the modified target template.

In the embodiment of the present disclosure, the preset templates may be summary templates configured in advance for different conference types and dialog backgrounds and may include the same or different summary items. Based on this, before collecting a dialog to be processed in a conference, in response to a summary configuration request from a user, the preset templates may be displayed on a display interface for the user to choose from, and the preset template selected by the user's summary configuration operation may be determined as the target template.

Considering the variability of dialog backgrounds and conference types in practice, in order to better adapt to the user's summarization requirements for the dialog to be processed, the summary items in the target template may be modified in response to the user's modification request for the target template.

When specifically implementing, the user may modify, add, or delete the summary items configured in the target template through the modification request. It should be understood that when adding the summary items in the target template, the summary items in another preset template may be added to the target template. In addition, while generating the summary configuration information based on the modified target template, a new summary template may be generated based on the target template, and the new summary template may be added to the preset template, so that the user does not need to modify the target template again next time, thereby improving the user's usage experience.

Step S202: generating a prompt header of the large language model based on the summary configuration information. Please refer to step S102 in the embodiment shown in FIG. 1 for details, which will not be repeated here.

Step S203: instructing the large language model to summarize the dialog to be processed according to the prompt header to obtain a summary result. Please refer to step S103 in the embodiment shown in FIG. 1 for details, which will not be repeated here.

In the embodiment of the present disclosure, considering the variability of dialog backgrounds and conference types in practice, in order to better adapt to the user's summarization requirements for the dialog to be processed, the user may be supported to perform personalized configuration on the summary item in the preset template, so as to improve the applicability of the present disclosure in practice.

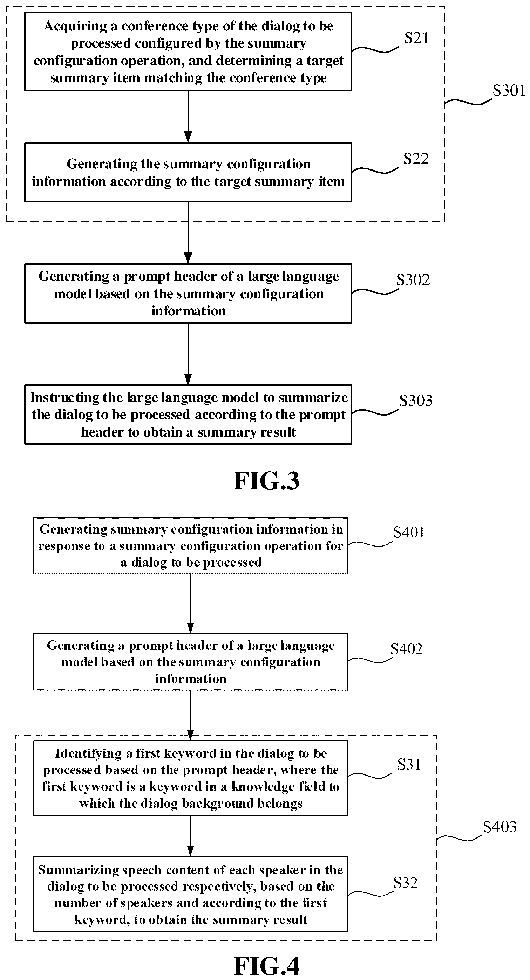

The present embodiment provides a third method for summarizing a dialog content, which may be used in the above mobile terminal, such as a mobile phone, a tablet computer, etc. FIG. 3 is a flowchart of a third method for summarizing a dialog content according to an embodiment of the present disclosure. As shown in FIG. 3, the process includes the following steps:
Step S301: generating summary configuration information in response to a summary configuration operation for a dialog to be processed.

Specifically, the above step S301 includes:
Step S21: acquiring a conference type of the dialog to be processed configured by the summary configuration operation, and determining a target summary item matching the conference type.
Step S22: generating the summary configuration information according to the target summary item.

In the embodiment of the present disclosure, the mapping relationship between the conference type and the above summary item may be established in advance, and the mapping information may be determined based on the mapping relationship, where each conference type may correspond to a plurality of summary items.

Based on this, the user may configure the conference type of the dialog to be processed through the above summary configuration. Upon acquiring the conference type configured by the user, the summary item having a mapping relationship with the conference type may be searched for based on the above mapping information, and the summary item may be determined as the target summary item.

Next, the target summary item may be directly passed into the above LLM as the summary configuration information to generate the Prompt header. Alternatively, the user may be asked whether to generate a preset template based on the target summary item. Upon detecting the user's generation request, the generated preset template may be passed into the above LLM to generate the Prompt header, so that the preset template can be directly called when the above conference type configured by the summary configuration operation is acquired next time.

Step S302: generating a prompt header of a large language model based on the summary configuration information. Please refer to step S102 in the embodiment shown in FIG. 1 for details, which will not be repeated here.

Step S303: instructing the large language model to summarize the dialog to be processed according to the prompt header to obtain a summary result. Please refer to step S103 in the embodiment shown in FIG. 1 for details, which will not be repeated here.

In the embodiment of the present disclosure, considering the variability of dialog backgrounds and conference types in practice, in order to better adapt to the user's summarization requirements for the dialog to be processed, the summary items may be directly configured for the dialog to be processed, so as to further adapt to the user's usage requirements, thereby improving the applicability of the present disclosure in practice.

The present embodiment provides a fourth method for summarizing a dialog content, which may be used in the above mobile terminal, such as a mobile phone, a tablet computer, etc. FIG. 4 is a flowchart of a fourth method for summarizing a dialog content according to an embodiment of the present disclosure. Here, the above summary item includes: the number of speakers. As shown in FIG. 4, the process includes the following steps:
Step S401: generating summary configuration information in response to a summary configuration operation for a dialog to be processed. Please refer to step S101 in the embodiment shown in FIG. 1 for details, which will not be repeated here.

Step S402: generating a prompt header of a large language model based on the above summary configuration information. Please refer to step S102 in the embodiment shown in FIG. 1 for details, which will not be repeated here.

Step S403: instructing the above large language model to summarize the dialog to be processed according to the above prompt header to obtain a summary result.

Specifically, the above step S403 includes:
Step S31: identifying a first keyword in the dialog to be processed based on the above prompt header, where the first keyword is a keyword in a knowledge field to which the dialog background belongs.
Step S32: summarizing speech content of each speaker in the dialog to be processed respectively, based on the above number of speakers and according to the first keyword, to obtain the summary result.

In the embodiment of the present disclosure, the user may configure the dialog background of the dialog to be processed through the above summary configuration operation, so that the above LLM identifies the knowledge field corresponding to the dialog background. For example, if the dialog background is set as the discussion about the scrambled eggs with tomatoes, the knowledge field corresponding to the dialog background may be food, cooking or cuisine.

Based on this, when generating a prompt header (hereinafter referred to as the Prompt header) according to the summary configuration information, the prompt header may include the dialog background and the knowledge field to which the dialog background belongs. For example, the following Prompt header can be generated:
Go

You are an expert in dialog content summarization, and now you need to summarize chat content in the field of cuisine and relate to a knowledge base of food and cooking.

Your summary generation template is shown below.
Dialog theme:
Number of speakers:
Dialog summarization:
Dialog conclusion:

When identifying the first keyword in the dialog to be processed based on the above prompt header, a knowledge base corresponding to the knowledge field configured in the Prompt header may be acquired, and the first keyword matching a word in the knowledge base may be searched for in the dialog to be processed. The first keyword may be a word stored in the knowledge base, or a synonym of the word stored in the knowledge base.

Considering that multiple speakers may correspond to the above dialog to be processed, speech content corresponding to each speaker may be identified in the dialog to be processed respectively, and be summarized in the dialog summarization item of the above Prompt header respectively. Specifically, the summarization may be performed around the first keyword in the speech content of each speaker.

In the embodiment of the present disclosure, the first keyword may be identified in the dialog to be processed, where the first keyword is a keyword in the knowledge field to which the dialog background belongs, so that the dialog to be processed is summarized around the first keyword, thereby reducing the deviation of the summarized summary result from the dialog background, and adapting to the user's summarization requirements for dialogs to be processed with different dialog backgrounds.

In some optional implementations, the above step S32 includes:
Step a1: acquiring sub-summarization content corresponding to each speaker.
Step a2: searching for an associated keyword in the sub-summarization content, and determining the dialog summarization according to the searching result.
Step a3: determining the summary result according to the dialog summarization.

In the embodiment of the present disclosure, when the conference type of the dialog to be processed is a discussion, the summary item in the summary configuration information may include the dialog summarization, which may include a discussion result. For example, when the speakers include: speaker A, speaker B, and speaker C, taking speaker A as an example, the dialog content of speaker A in the dialog to be processed may be identified, and the dialog may be summarized to obtain sub-summarization content A. Similarly, sub-summarization content B of speaker B and sub-summarization content C of speaker C may be obtained, respectively.

Next, the associated keyword in each sub-summarization content may be parsed, so as to parse the semantics of the sub-summarization content and summarize the same according to the associated keyword, so as to obtain the dialog summarization. The associated keyword may be the same word, a synonym, or a near-synonym.

For example, if the sub-summarization content A is that the eggs should be cooked first for the scrambled eggs with tomatoes, if the sub-summarization content B is that the eggs should be scrambled first, and if the sub-summarization content C is that the tomatoes should be put in last for the scrambled eggs with tomatoes, the associated keywords determined according to the sub-summarization content may be scrambled eggs with tomatoes, eggs, and tomatoes. The dialog summarization determined based on the associated keywords may be: scramble eggs first, and then put tomatoes for the scrambled eggs with tomatoes.

In the embodiment of the present disclosure, when configuring the above summary information, the user may configure the summary style of the "dialog summarization" item in the summary information, such as being concise and comprehensive, or being default. When the summary style is concise and comprehensive, the dialog summarization includes the description of the above sub-summarization content. At this time, the generated summary result is as follows:
Go
Dialog theme: whether to put eggs or tomatoes first in the scrambled eggs with tomatoes
Number of speakers: 3
Dialog summarization: parties discussed the cooking method of scrambled eggs with tomatoes, and argued about the order of cooking
Dialog conclusion: scramble eggs first, and then put tomatoes for scrambled eggs with tomatoes

In the embodiment of the present disclosure, when the summary style is concise and comprehensive, the dialog summarization includes the specific content of the above sub-summarization contents. At this time, the generated summary result is as follows:
Go
Dialog theme: whether to put eggs or tomatoes first in scrambled eggs with tomatoes
Number of speakers: 3
Dialog summarization: speaker A believes that the eggs should be cooked first for the scrambled eggs with tomatoes; speaker B believes that the eggs should be scrambled first; speaker C believes that the tomatoes should be put in last for the scrambled eggs with tomatoes
Dialog conclusion: scramble eggs first, and then put tomatoes for the scrambled eggs with tomatoes

In the embodiment of the present disclosure, when the conference style of the dialog to be processed is a discussion, the user may configure the summary style of the "dialog summarization" item in the above summary information when configuring the above summary information, and the summary style may include concise and comprehensive, default, etc., so as to adapt to the user's various summary summarization requirements.

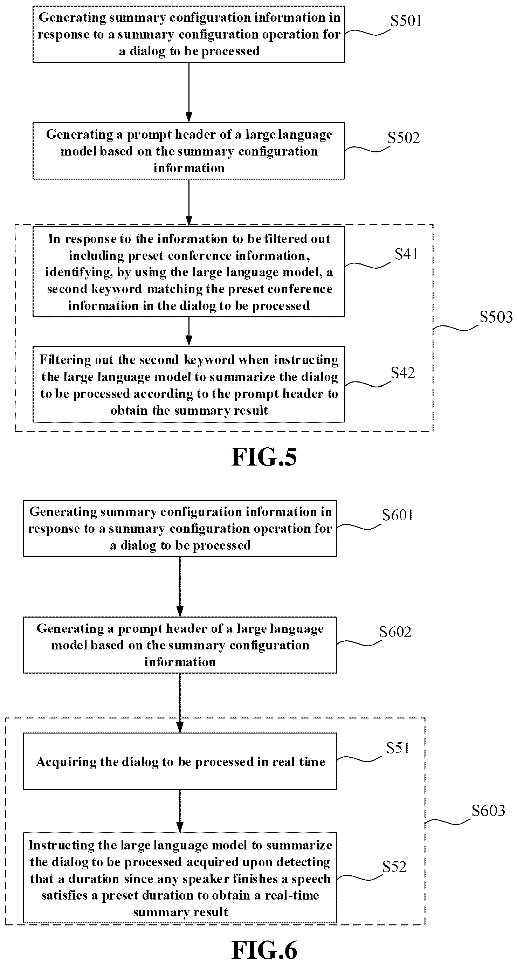

The present embodiment provides a fifth method for summarizing a dialog content, which may be used in the above mobile terminal, such as a mobile phone, a tablet computer, etc. FIG. 5 is a flowchart of a fifth method for summarizing a dialog content according to an embodiment of the present disclosure. Here, the above prompt header includes information to be filtered out. As shown in FIG. 5, the process includes the following steps:
Step S501: generating summary configuration information in response to a summary configuration operation for a dialog to be processed. Please refer to step S101 in the embodiment shown in FIG. 1 for details, which will not be repeated here.
Step S502: generating a prompt header of a large language model based on the above summary configuration information. Please refer to step S102 in the embodiment shown in FIG. 1 for details, which will not be repeated here.
Step S503: instructing the above large language model to summarize the dialog to be processed according to the above prompt header to obtain a summary result.

Specifically, the above step S503 includes:
S41: when the above information to be filtered out includes preset conference information, identifying a second keyword matching the preset conference information in the dialog to be processed by using the large language model;
S42: when instructing the large language model to summarize the dialog to be processed according to the prompt header, filtering out the second keyword to obtain the summary result.

In the embodiment of the present disclosure, the above information to be filtered out may include the preset conference information, and the preset conference information is sensitive information related to conference content, such as personal information appearing in the dialog to be processed, such as a person's name, contact information, etc. Alternatively, the sensitive information may also be confidential conference information, such as a project fund.

The large language model may identify the second keyword matching the above preset conference information in the dialog to be processed, and filter out the second keyword. For example, the second keyword may be masked, or the second keyword may be replaced with preset content, such as XXX.

In the embodiment of the present disclosure, the LLM may be instructed to filter out the sensitive information in the dialog to be processed by configuring the preset conference information in the summary configuration information, thereby protecting the user's privacy. Here, the sensitive information may be related to the conference content, thereby enhancing the versatility of the LLM in conference scenarios.

The present embodiment provides a sixth method for summarizing a dialog content, which may be used in the above mobile terminal, such as a mobile phone, a tablet computer, etc. FIG. 6 is a flowchart of a sixth method for summarizing a dialog content according to an embodiment of the present disclosure. Here, the above prompt header may include information to be filtered out. As shown in FIG. 5, the process includes the following steps:
Step S601: generating summary configuration information in response to a summary configuration operation for a dialog to be processed. Please refer to step S101 in the embodiment shown in FIG. 1 for details, which will not be repeated here.
Step S602: generating a prompt header of a large language model based on the above summary configuration information. Please refer to step S102 in the embodiment shown in FIG. 1 for details, which will not be repeated here.
Step S603: instructing the above large language model to summarize the dialog to be processed according to the above prompt header to obtain a summary result.

Specifically, the above step S603 includes:
Step S51: acquiring the dialog to be processed in real time.
Step S52: upon detecting that a duration since any speaker finishes a speech satisfies a preset duration, instructing the large language model to summarize the dialog to be processed acquired to obtain a real-time summary result.

In the embodiment of the present disclosure, when configuring the above summary configuration information, the summary generation mode may be configured, and the summary generation mode includes: real-time summarization, trigger summarization, and summarization after the dialog. Here, when the summary generation mode is the real-time summarization, the above dialog to be processed may be acquired in real time, and the dialog to be processed may be summarized upon each speech is finished to obtain a real-time summary result.

Specifically, the dialog to be processed that has been acquired may be summarized to obtain the summary result after the preset duration since each speech is finished. It should be understood that if the summary result already exists in the cache, the original summary result may be updated based on the real-time summary result.

In addition, when the summary generation mode is the trigger summarization, upon detecting a trigger operation of the user on a summary button, the obtained dialog to be processed may be summarized. When the summary generation mode is the summarization after the dialog , whether the dialog to be processed has ended may be monitored in real time. Specifically, whether the user triggers an end-of-conference identifier may be detected, and if so, the dialog to be processed will be summarized.

In the embodiment of the present disclosure, when configuring the above summary configuration information, the summary generation mode may be configured, and the summary generation mode includes: real-time summarization, trigger summarization, and summarization after the dialog. When the summary generation mode is the real-time summarization, the user may share the summarized summary result with other users in real time, so as to improve the user's usage experience. In addition, when the summary generation mode is the trigger summarization and the summarization after the dialog, the number of summarizations may be reduced, thereby reducing the LLM's requirement for computing power resources.

In some optional implementations, upon obtaining the summary result, the above embodiment corresponding to FIG. 1 further includes the following process:
Step b1: acquiring a summary result of a historical dialog and determining, based on the dialog to be processed and the summary result of the historical dialog, an associated dialog corresponding to the dialog to be processed in the historical dialog.
Step b2: combining the dialog to be processed and the associated dialog to obtain a combined result, and summarizing based on the combined result to obtain a combined summary.

In the embodiment of the present disclosure, the historical dialog may be managed through a dialog management function, and the historical dialog refers to the dialog to be processed acquired by the above LLM within a preset historical period of time. When managing the historical dialog, the associated dialog may be added to the same management file, or the associated dialog may be combined. Here, the associated dialog may be two associated conferences with the same conference theme.

When determining the above associated dialog, a first summary result of the dialog to be processed and a second summary result of the historical dialog may be acquired separately, and the historical dialog whose content of the second summary result is related to the first summary result may be determined as the associated dialog of the dialog to be processed. For example, the historical dialog whose "dialog theme" item in the second summary result is the same as the first summary result may be determined as the associated dialog.

Upon determining the associated dialog, the second summary result of the associated dialog and the above first summary result may be combined to obtain the combined summary. Specifically, summary items that can be combined therein may be combined, such as the dialog summary and the dialog summarization.

In the embodiment of the present disclosure, the associated dialog may be managed, thereby enriching the conference management function in the present disclosure and improving the user's usage experience.

In some optional implementations, upon obtaining the summary result, the above embodiment corresponding to FIG. 1 further includes the following process:
Step c1: acquiring feedback data for the summary result, and generating training data according to the feedback data.
Step c2: adjusting a parameter of the large language model based on the above training data to obtain an updated large language model.

In the embodiment of the present disclosure, the user may evaluate the summary summarization generated by the LLM according to the user's own usage experience. Specifically, whether each summary item in the summary result is accurate may be evaluated, and inaccurate parts may be modified. Therefore, the modification content of the user may be acquired, and the feedback data may be generated based on the modification content, thereby generating the training data based on the feedback data.

In an optional implementation, when training the LLM with the training data, the parameter of the large language model may be adjusted, so that the summary summarization output by the large language model meets the confidence requirement.

In the embodiment of the present disclosure, the LLM may be trained according to the user's feedback data, so as to improve the LLM's understanding of data, thereby improving the quality of the summary summarization output by the LLM.

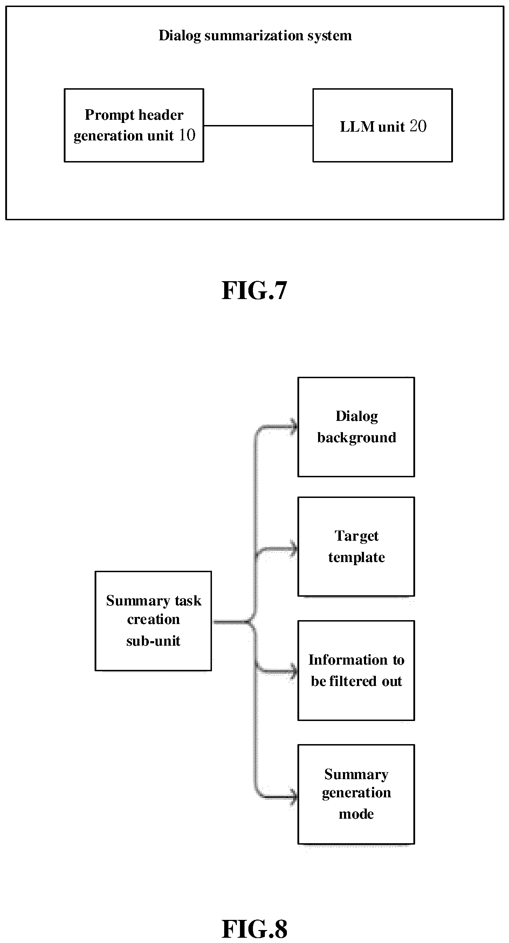

The present embodiment provides a dialog summarization system, FIG. 7 is a diagram of a system architecture of the dialog summarization system, and the system includes: a Prompt header generation unit 10 and an LLM unit 20, where:
The Prompt generation unit 10 is configured to generate summary configuration information in response to a summary configuration operation for a dialog to be processed, and generate a prompt header of a large language model based on the summary configuration information.

In the embodiment of the present disclosure, the Prompt generation unit may include a summary task creation sub-unit. As shown in FIG. 8, the summary task creation unit may acquire the dialog background configured by the above summary configuration operation, the above target template, the above information to be filtered out, and the above summary generation mode. In addition, the manner of generating a prompt header of a large language model based on the summary configuration information is as described in the embodiment corresponding to the above step S102, which will not be repeated here.

The LLM unit 20 acquires the dialog content of the dialog to be processed in real time, and instructs the large language model to summarize the dialog to be processed according to the above prompt header to obtain a summary result.

In the embodiment of the present disclosure, upon the Prompt header is generated by the above Prompt generation unit, the content of the Prompt and the dialog to be processed may be input into the LLM, so as to summarize the dialog to be processed by the LLM to obtain the summary result. For the specific summarization process, please refer to the embodiment corresponding to the above step S103, which will not be repeated here.

In conclusion, in the embodiment of the present disclosure, first, summary configuration information may be generated in response to a summary configuration operation for a dialog to be processed, where the summary configuration information is used to indicate a dialog background and a summary item included in a generated summary. Then, a prompt header of a large language model may be generated based on the summary configuration information, so as to instruct the large language model to summarize the dialog to be processed according to the prompt header to obtain a summary result. In this way, the dialog content summarization is implemented by the large language model, thereby reducing reliance on manpower, and reducing labor costs while improving summarization efficiency.

The present embodiment further provides an apparatus for summarizing a dialog content. The apparatus is configured to implement the above embodiments and preferred implementations, and details that have been described will not be repeated. As used hereunder, the term "module" may be a combination of software and/or hardware that can implement a predetermined function. Although the apparatus described in the following embodiments is preferably implemented in software, implementation in hardware, or in a combination of software and hardware, is also possible and contemplated.

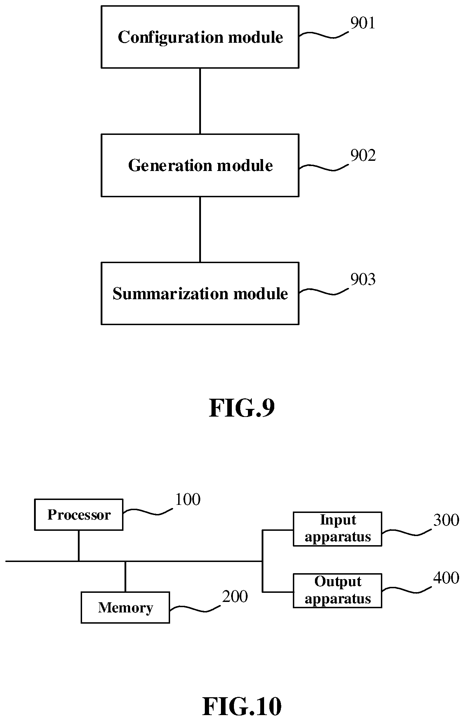

The present embodiment provides an apparatus for summarizing the dialog content, as shown in FIG. 9, including:
a configuration module 901, configured to generate summary configuration information in response to a summary configuration operation for a dialog to be processed, where the summary configuration information is used to indicate a dialog background and a summary item included in a generated summary;
a generation module 902, configured to generate a prompt header of a large language model based on the summary configuration information; and
a summarization module 903, configured to instruct the large language model to summarize the dialog to be processed according to the prompt header to obtain a summary result.

In some optional implementations, the generation module 902 includes:
a first determination unit, configured to determine a target template indicated by the summary configuration operation from a plurality of preset templates; and
a modification unit, configured to modify a summary item in the target template in response to a modification request for the target template, and generate the summary configuration information according to the modified target template.

In some optional implementations, the configuration module 901 includes:
a second determination unit, configured to acquire a conference type of the dialog to be processed configured by the summary configuration operation, and determine a target summary item matching the conference type; and
a first generation unit, configured to generate the summary configuration information according to the target summary item.

In some optional implementations, the summary item includes: the number of speakers, and the summarization module 903 includes:
a first identification unit, configured to identify a first keyword in the dialog to be processed based on the prompt header, where the first keyword is a keyword in a knowledge field to which the dialog background belongs; and
a first summarization unit, configured to summarize speech content of each speaker in the dialog to be processed respectively based on the number of speakers and according to the first keyword, to obtain the summary result.

In some optional implementations, the summary item includes: a dialog summarization, and the summarization unit includes:
an acquisition sub-unit, configured to acquire sub-summarization content corresponding to each speaker;
a search sub-unit, configured to search for an associated keyword in the sub-summarization content, and determine the dialog summarization according to a searching result; and
a determination sub-unit, configured to determine the summary result according to the dialog summarization.

In some optional implementations, the prompt header includes: information to be filtered out, and the summarization module 903 includes:
a second identification unit, configured to: identify a second keyword matching the preset conference information in the dialog to be processed by using the large language model when the information to be filtered out includes preset conference information; and
a filtering unit, configured to filter out the second keyword when instructing the large language model to summarize the dialog to be processed according to the prompt header, to obtain the summary result.

In some optional implementations, the above summarization module 903 includes:
an acquisition unit, configured to acquire the dialog to be processed in real time; and
a second summarization unit, configured to instruct the large language model to summarize the dialog to be processed acquired upon detecting that a duration since any speaker finishes a speech satisfies a preset duration to obtain a real-time summary result.

In some optional implementations, the above apparatus further includes:
a third determination unit, configured to acquire a summary result of a historical dialog, and determine, based on the dialog to be processed and the summary result of the historical dialog , an associated dialog corresponding to the dialog to be processed in the historical dialog upon obtaining the summary result; and
a third summarization unit, configured to combine the dialog to be processed and the associated dialog to obtain a combined result, and summarize based on the combined result to obtain a combined summary.

In some optional implementations, the above apparatus further includes:
a second generation unit, configured to acquire feedback data for the summary result and generate training data according to the feedback data upon obtaining the summary result; and
an adjustment unit, configured to adjust a parameter of the large language model based on the training data to obtain an updated large language model.

Further functional descriptions of the above modules and units are the same as the above corresponding embodiments, which will not be repeated here.

The apparatus for summarizing the dialog content in the present embodiment is presented in the form of functional units, where the units herein refer to an Application Specific Integrated Circuit (ASIC) circuit, a processor and a memory that execute one or more pieces of software or fixed programs, and/or other devices that can provide the above functions.

The embodiments of the present disclosure further provide a computer device, which is provided with the dialog content summarization apparatus shown in FIG. 9.

Please refer to FIG. 10. FIG. 10 is a schematic structural diagram of a computer device according to an optional embodiment of the present disclosure. As shown in FIG. 10, the computer device includes: one or more processors 100, a memory 200, and interfaces for connecting components, including a high-speed interface and a low-speed interface. The components communicate with each other through different buses and can be installed on a common main board or installed in other manners as required. The processor can process instructions executed in the computer device, including instructions for storing graphic information of a GUI in the memory or on the memory for display on an external input/output apparatus (such as a display device coupled to the interface). In some optional implementations, multiple processors and/or multiple buses can be used together with multiple memories and multiple memories if required. Similarly, multiple computer devices can be connected, and each device provides part of necessary operations (for example, as a server array, a group of blade servers, or a multi-processor system). In FIG. 10, one processor 100 is taken as an example.

The processor 100 may be a central processor, a network processor, or a combination thereof. The processor 100 may further include a hardware chip. The hardware chip may be an application-specific integrated circuit, a programmable logic device, or a combination thereof. The programmable logic device may be a complex programmable logic device, a field programmable gate array, a generic array logic, or any combination thereof.

The memory 200 stores instructions executable by at least one processor 100, so that the at least one processor 100 can execute the method shown in the least one of the above embodiments.

The memory 200 may include a program storage region and a data storage region. The program storage region may store an operating system and an application required for at least one function. The data storage region may store data created according to the use of the computer device. In addition, the memory 200 may include a high-speed random-access memory, and may further include a non-transitory memory, for example, at least one magnetic disk storage device, a flash memory device, or another non-transitory solid-state storage device. In some optional implementations, the memory 200 may optionally include a memory provided remotely relative to the processor 100, and these remote memories may be connected to the computer device over a network. Examples of the network include but are not limited to the Internet, an intranet, a local area network, a mobile communication network, and a combination thereof.

The memory 200 may include a volatile memory, for example, a random-access memory. The memory may also include a non-volatile memory, for example, a flash memory, a hard disk, or a solid-state drive. The memory 200 may further include a combination of the above types of memories.

The computer device further includes an input apparatus 300 and an output apparatus 400. The processor 100, the memory 200, the input apparatus 300, and the output apparatus 400 may be connected through a bus or other means, and FIG. 10 shows an example of connection through a bus.

The input apparatus 300 may receive input digital or character information, and generate key signal input related to user settings and function control of the computer device, such as a touchscreen, a keypad, a mouse, a trackpad, a touchpad, a pointing stick, one or more mouse buttons, a trackball, a joystick, and the like. The output apparatus 400 may include a display device, an auxiliary lighting apparatus (for example, an LED), a tactile feedback apparatus (for example, a vibration motor), and the like. The above display device includes but is not limited to a liquid crystal display, a light-emitting diode, a display, and a plasma display. In some optional implementations, the display device may be a touchscreen.

The embodiments of the present disclosure further provide a computer-readable storage medium. The above method according to the embodiments of the present disclosure may be implemented in hardware or firmware, or may be implemented as computer code that can be recorded in a storage medium, or computer code that is originally stored in a remote storage medium or a non-transitory machine-readable storage medium and downloaded through a network and will be stored in a local storage medium. Thus, the method described hereunder may be stored in such software processing on the storage medium using a general-purpose computer, a dedicated processor, or programmable or dedicated hardware. The storage medium may be a magnetic disk, an optical disk, a read-only memory, a random-access memory, a flash memory, a hard disk, a solid-state drive, etc. Further, the storage medium may further include a combination of the above types of memories. It can be understood that a computer, a processor, a microprocessor controller, or programmable hardware includes a storage component that can store or receive software or computer code, and when the software or computer code is accessed and executed by the computer, the processor, or the hardware, the method shown in the above embodiments is implemented.

It can be understood that before using the technical solutions disclosed in the embodiments of the present disclosure, the user shall be informed of the type, usage scope, usage scenario, etc. of the personal information involved in the present disclosure and the user's authorization shall be obtained in an appropriate manner in accordance with relevant laws and regulations.

For example, in response to receiving an active request from a user, prompt information is sent to the user, so as to clearly prompt the user that the operation requested by the user to be performed will require the acquisition and use of the user's personal information. In this way, the user can independently choose, according to the prompt information, whether to provide the personal information to software or hardware such as an electronic device, an application, a server, or a storage medium that executes the operation of the technical solutions of the present disclosure.

As an optional but non-limiting implementation, the manner of sending prompt information to the user in response to receiving the active request from the user may be, for example, a pop-up window, and the prompt information may be presented in the pop-up window in text. In addition, the pop-up window may further include a selection control for the user to choose whether to "agree" or "disagree" to provide the personal information to the electronic device.

It can be understood that the above process of notifying and acquiring the user's authorization is only exemplary, and does not limit the implementations of the present disclosure. Other manners that meet relevant laws and regulations may also be applied to the implementations of the present disclosure.

Although the embodiments of the present disclosure are described with reference to the drawings, persons of ordinary skill in the art may make various modifications and variations, and such modifications and variations shall fall within the protection scope of the claims.

## Claims

1. A method for summarizing a dialog content, comprising:
generating (S101), in response to a summary configuration operation for a dialog to be processed, summary configuration information, wherein the summary configuration information is used to indicate a dialog background and a summary item comprised in a generated summary;
generating (S102), based on the summary configuration information, a prompt header of a large language model; and
instructing (S103), according to the prompt header, the large language model to summarize the dialog to be processed to obtain a summary result.

2. The method of claim 1, wherein generating (S201), in response to the summary configuration operation for the dialog to be processed, the summary configuration information comprises:
determining (S11), from a plurality of preset templates, a target template indicated by the summary configuration operation; and
modifying (S12), in response to a modification request for the target template, a summary item in the target template, and generating the summary configuration information according to the modified target template.

3. The method of claim 1, wherein generating (S301), in response to the summary configuration operation for the dialog to be processed, the summary configuration information further comprises:
acquiring (S21) a conference type of the dialog to be processed configured by the summary configuration operation, and determining a target summary item matching the conference type; and
generating (S22), according to the target summary item, the summary configuration information.

4. The method of claim 1, wherein the summary item comprises a number of speakers, and
instructing (S402), according to the prompt header, the large language model to summarize the dialog to be processed to obtain the summary result comprises:
identifying (S31), based on the prompt header, a first keyword in the dialog to be processed, wherein the first keyword is a keyword in a knowledge field to which the dialog background belongs; and
summarizing (S32), based on the number of speakers and according to the first keyword, speech content of each speaker in the dialog to be processed respectively, to obtain the summary result.

5. The method of claim 4, wherein the summary item comprises a dialog summarization, and
summarizing (S32), based on the number of speakers, the speech content of each speaker in the dialog to be processed respectively, to obtain the summary result, comprises:
acquiring sub-summarization content corresponding to each speaker;
searching for an associated keyword in the sub-summarization content, and determining the dialog summarization according to a searching result; and
determining the summary result according to the dialog summarization.

6. The method of claim 1, wherein the prompt header comprises information to be filtered out, and
instructing (S503), according to the prompt header, the large language model to summarize the dialog to be processed to obtain the summary result further comprises:
in response to the information to be filtered out comprising preset conference information, identifying (S41), by using the large language model, a second keyword matching the preset conference information in the dialog to be processed; and
filtering (S42) out the second keyword in response to instructing, according to the prompt header, the large language model to summarize the dialog to be processed to obtain the summary result.

7. The method of claim 1, wherein instructing (S603), according to the prompt header, the large language model to summarize the dialog to be processed to obtain the summary result, further comprises:
acquiring (S51) the dialog to be processed in real time; and
instructing (S52), upon detecting that a duration since any speaker finishes a speech satisfies a preset duration, the large language model to summarize the acquired dialog to be processed to obtain a real-time summary result.

8. The method of claim 1, further comprising:
acquiring, upon obtaining the summary result, a summary result of a historical dialog, and determining, based on the dialog to be processed and the summary result of the historical dialog, an associated dialog corresponding to the dialog to be processed in the historical dialog; and
combining the dialog to be processed and the associated dialog to obtain a combined result, and summarizing based on the combined result to obtain a combined summary.

9. The method of claim 1, further comprising:
acquiring, upon obtaining the summary result, feedback data for the summary result, and generating training data according to the feedback data; and
adjusting, based on the training data, a parameter of the large language model to obtain an updated large language model.

10. An apparatus for summarizing a dialog content, comprising:
a configuration module (901), configured to generate summary configuration information in response to a summary configuration operation for a dialog to be processed, wherein the summary configuration information is used to indicate a dialog background and a summary item comprised in a generated summary;
a generation module (902), configured to generate a prompt header of a large language model based on the summary configuration information; and
a summarization module (903), configured to instruct the large language model to summarize the dialog to be processed according to the prompt header to obtain a summary result.

11. A computer device, comprising:
a memory and a processor, wherein the memory and the processor are communicatively connected with each other, the memory having computer instructions stored thereon, and the processor performs the method for summarizing the dialog content of any of claims 1 to 9 by executing the computer instructions.

12. A computer-readable storage medium, having computer instructions stored thereon, and the computer instructions are used to enable a computer to perform the method for summarizing the dialog content according to any of claims 1 to 9.
